# EUROPEAN PATENT SPECIFICATION

(11) **EP 1 796 487 B1**
(45) Date of publication and mention of the grant of the patent: **07.08.2013**
(21) Application number: 05792086.0
(22) Date of filing: 29.08.2005
(51) Int. Cl.: A23L 1/22, A23B 4/20, A23L 3/3463, A23L 3/3508, A23L 3/3526

(54) **THE USE OF GLYCINE AND/OR GLYCINE DERIVATES AS ANTIBACTERIAL AGENT AGAINST GRAM NEGATIVE BACTERIAL PATHOGENS IN FOODS AND/OR DRINKS**
VERWENDUNG VON GLYCIN UND/ODER GLYCINDERIVATEN ALS ANTIBAKTERIELLES MITTEL GEGEN PATHOGENE GRAM-NEGATIVER BAKTERIEN IN NAHRUNGSMITTELN UND/ODER GETRÄNKEN
UTILISATION DE GLYCINE ET/OU DERIVES DE GLYCINE COMME AGENT ANTIBACTERIEN DANS LES PRODUITS ALIMENTAIRES ET/OU BOISSONS

(30) Priority: 27.08.2004 EP 04104118
(43) Date of publication of application: 20.06.2007
(73) Proprietor: PURAC Biochem BV, 4206 AC Gorinchem (NL)
(72) Inventor: BONTENBAL, Edwin, Elize, Willem, NL-6701 CE Wageningen (NL); VEGT, DE, Bert, Theo, NL-3052 HC Rotterdam (NL)
(74) Representative: Beetz, Tom
(86) International application number: PCT/EP2005/054238
(87) International publication number: WO 2006/021587

(56) References cited:
- EP-A- 1 290 955
- EP-A- 1 366 664
- US-A- 2 711 976
- US-A- 4 820 520
- US-B1- 6 200 619
- PATENT ABSTRACTS OF JAPAN vol. 006, no. 068 (C-100), 30 April 1982 (1982-04-30) -& JP 57 008747 A (SHIMADAYA HONTEN:KK), 18 January 1982 (1982-01-18)
- PATENT ABSTRACTS OF JAPAN vol. 1996, no. 10, 31 October 1996 (1996-10-31) -& JP 08 154640 A (NIPPON OIL & FATS CO LTD), 18 June 1996 (1996-06-18)
- DATABASE FSTA [Online] INTERNATIONAL FOOD INFORMATION SERVICE (IFIS), FRANkFURT-MAIN, DE; 2000, SIRIPORN STONSAOVAPAK ET AL: "Study on the effect of environment on growth and survival of foodborne pathogen Escherichia coli O157:H7." XP002315133 Database accession no. 2001-00-c0487 & FOOD, 2000, FOOD 30 (4) 249-260 2000 INST. OF FOOD RES. & PRODUCT DEV., KASETSART UNIV., BANGKOK, THAILAND
- DATABASE FSTA [Online] INTERNATIONAL FOOD INFORMATION SERVICE (IFIS), FRANkFURT-MAIN, DE; 1985, TSUTSUMI M ET AL: "Antimicrobial action of glycine on Salmonella typhimurium in pickle." XP002315134 Database accession no. 86-2-04-t0016 & JAP. J. ZOOTECHNICAL SCIENCE, vol. 56, no. 7, 1985, page 571, JAPANESE JOURNAL OF ZOOTECHNICAL SCIENCE ((NIHON CHIKUSAN GAKKAI-HO)) 1985 FAC. OF AGRIC., IBARAKI UNIV., AMI-MACHI, IBARAKI-KEN, 300-03 JAPAN
- PATENT ABSTRACTS OF JAPAN vol. 1999, no. 06, 31 March 1999 (1999-03-31) -& JP 04 295431 A (HAARMANN & REIMER CORP), 20 October 1992 (1992-10-20)
- PATENT ABSTRACTS OF JAPAN vol. 2000, no. 26, 1 July 2002 (2002-07-01) -& JP 2001 245644 A (PRIMA MEAT PACKERS LTD), 11 September 2001 (2001-09-11)
- DATABASE FSTA [Online] INTERNATIONAL FOOD INFORMATION SERVICE (IFIS), FRANkFURT-MAIN, DE; 1988, TSUTSUMI M ET AL ISBN 0-8247-7993-2: "Studies on manufacture of foods cooked at low temperature. I. Pasteurization in the presence of glycine, NaCl and ethanol." XP002315135 Database accession no. 89-1-06-c0010 & J. JAP. SOC. FOOD SC. TECHN., vol. 35, no. 8, 1988, page 545, JOURNAL OF JAPANESE SOCIETY OF FOOD SCIENCE AND TECHNOLOGY [NIPPON SHOKUHIN KOGYO GAKKAISHI] 1988 FAC. OF AGRIC., IBARAKI UNIV., AMI-MACHI, INASHIKI-GUN, IBARAKI 300-03, JAPAN
- PATENT ABSTRACTS OF JAPAN vol. 2000, no. 11, 3 January 2001 (2001-01-03) -& JP 2000 224976 A (SHINKOO GIJUTSU KAIHATSU CENTER:KK; KIMURA KAZUTAKA), 15 August 2000 (2000-08-15)
- PATENT ABSTRACTS OF JAPAN vol. 016, no. 118 (C-0922), 25 March 1992 (1992-03-25) -& JP 03 290174 A (TOYO SEIKAN KAISHA LTD), 19 December 1991 (1991-12-19)

## Description

This invention relates to the use of an antibacterial agent against gram-negative bacterial pathogens in foods and drinks. Said antibacterial agent is in particular applied in refrigerated foods and drinks and more in particular in fresh or cooked meat (including poultry and fish) products. Further, said antibacterial agent is in particular used against bacteria from the genus *Escherichia Coli, Enterobacter sakazakii,* Salmonella, and Campylobacter in said food and drink products.

Conventionally, bacterial growth in food and drink applications is controlled and/or prevented by means of pH regulation, water activity control, addition of quality preserving agents as e.g. nitrite and/or using various processing techniques as for example heat treatment, irradiation or high-pressure treatment. However, when controlling gram-negative bacterial pathogens the above-described measures are often either insufficient, undesirable or not suitable for the type of food or drink product.

For instance, controlling the water activity in products is possible by means of e.g. salt addition. Controlling or preventing bacterial growth in products by means of salt addition however requires high salt concentrations. Said high concentrations often lead to a loss of taste because the product becomes too salty. Further, a too high salt dosage is also not desired with respect to health issues as for example heart and vascular diseases or blood pressure. Furthermore, in protein-containing products as for example meat (this is including fish and poultry) said high salt concentrations may lead to deterioration of the texture of the product. As gram-negative bacterial pathogens such as *Escherichia Coli, Enterobacter sakazakii, Salmonella,* and *Campylobacter* are notoriously present in protein-containing products such as milk, meat, cheese etcetera, controlling the water activity is often not a viable solution.

Also pH regulation of the pH as means for controlling bacterial growth can cause loss of taste of the product and/or loss of texture of the product, especially in protein-rich food and drink products. Furthermore, some gram-negative pathogenic bacteria are relatively insensitive to acid addition. For instance growth of *Campylobacter* bacteria and Salmonella bacteria can be stopped at a pH lower than respectively 4.0 and 3.8, which pH is for some food applications undesirable because of its effect on taste and texture.

Nitrite is added in cured meat (including poultry and fish) applications for the purpose of preserving product quality. Nitrite is able to stop bacterial growth of some types of bacteria as for example *Clostridium.* In some cases nitrite is added as colouring agent to maintain a certain colour in the meat product. Due to this colouring effect of nitrite it is not desirable for all meat applications. Examples of uncured, not nitrite-containing, product applications are (German) sausages, chicken and turkey meat and roast beef. As mentioned above, especially gram-negative bacterial pathogens are often present in these food products. At present legislation is aimed at minimisation of the use of nitrite in food applications. It goes without saying that processing techniques as for example heat treatment, irradiation or high-pressure treatment as method for preservation of products is not always applicable to food and drink applications such as salads and other vegetable products, drinks and dairy products, ready-to-eat meals and some types of fish as for example shrimps, due to processing spreed, costs, consumer preference and influence on the texture and/or taste.

Thus, said above-mentioned methods of salt addition, pH regulation, nitrite addition and processing techniques as e.g. heat treatment are not always satisfactory for the purpose of preservation of foods and drinks, especially when controlling gram-negative bacterial pathogens. Accordingly, the preservation of protein-containing food products, pH sensitive food products and refrigerated food products such as drinks and dairy products, salads and other vegetable products, dried foods and convenient foods as e.g. ready-to-eat meals, and especially meat (= including fish and poultry) products still proves to be a problem, especially if the food product needs to be protected against food poisoning as consequences of e.g. temperature-abuse and/or contamination of food and drink products. It is known that one of the most important causes of food poisoning is contamination due to incorrect handling of food and drink products. Furthermore, products are often stored at improper conditions. Temperature-abuse (e.g. incidental storage at high temperature) can cause the in the product already present but inactivated bacteria to grow again resulting in food poisoning by pathogenic bacteria. The invention provides an effective alternative to overcome the above-mentioned problems in preservation of foods and drinks against food poisoning and further provides a means for fighting food poisoning by pathogenic bacteria of food and drink products due to e.g. temperature-abuse and/or contamination due to e.g. improper handling and/or improper preparation.

It is known that glycine can be used to prevent growth of bacteria which cause food spoilage, also called putrefaction. Normally these are lactic acid bacteria, i.e. gram-positive bacteria. When food is spoiled, the taste and/or its appearance is affected, but the consumers health is not at stake. The present invention, however, is directed to the prevention of food poisoning. Food poisoning is caused by gram-negative bacterial pathogens such as *Escherichia Coli* and *Enteroacter Sakazakii, Salmonella* and *Campylobacter.* Said pathogens produce toxine and/or cause infections. For instance *Enterobacter Sakazakii* is abundant in baby milk and may cause serious health problem for babies. Because of the presence of a cell-wall and consequently totally different chemical and physical properties, generally, gram-negative bacterial pathogens are more difficult to fight than gram-positive bacteria.

Various publications exist which describe the antibacterial effect of glycine against food spoilage: JP2000-224976 describes a preservative for food using calcium lactate and glycine in combination with organic acid salts such as e.g. citric acid, acetic acid or gluconic acid. Further, the publication describes that said preservative has effect against microorganisms such as lactic acid bacteria. The publication refers to the use of glycine in combination with said organic acid salts against food spoilage rather than to food poisoning with gram negative bacterial pathogens.

JP2001-245644 describes a method of improving a preservable period of a processed food such as processed meats or edible daily dishes by using at least a lactic acid salt and an acetic acid salt. Glycine may be added as necessary. The publication describes that said method is capable of suppressing the growth of microorganisms associated with putrefaction or deterioration. The publication does not refer to any effect of the method on food pathogenic bacteria.

UK 1510942 describes the concurrent use of maltose and glycine to prevent putrefaction in foodstuffs such as Japanese-style confectionaries, jams, jellies, chilled-served desserts, dairy products and fruit preserves. One test is described wherein said combination of maltose and glycine is tested against putrefaction of a beef extract medium by Bacillus bacteria. The publication is directed to food spoilage by lactic acid bacteria rather than to food poisoning by gram-negative bacterial pathogens.

US 2711976 describes that glycine can be used against food spoilage by "heat resistant indigenous or natural flora which survive the usual cooking or heat treating operation" and further against food poisoning outbreaks by enterotoxigenic microorganisms such as *Micrococcus pyogenes* or more commonly referred to as *Staphylococcus.*

JP 57-008747 discloses that the addition of glycine to raw materials for dried noodles has an antibacterial effect on the general group of coliform bacilli, and does not disclose use of glycine as antibacterial agent in a refrigerated food.

Stonsaovapak et al. (Food 30th year Vol. 4 October - December 2000; XP002315133) discloses that glycine affects growth of two E. coli strains in TSB nutrient broth. In addition, the survival of E. coli O157:H7 in three ready to eat foods held at 4°C is measured, however, without the addition of glycine.

Tsutsumi and Ohtaka (Japan Journal of Zootech. Sci. 56 (1985), 571-576; XP002315134) disclose the antimicrobial action against S. typhimurium of a pickle solution (a solution containing sucrose, salt and nitrate for use in meat processing) with and without glycine. The addition of glycine to the pickle solution hardly led to any improved antimicrobial action against Salmonella typhimurium as compared to the pickle solution without glycine.

EP.1290955 discloses a few food applications with preservative mixtures, some of which containing glycine. Figure 22 depicts the results of the only test wherein E. coli is specified as a test microorganism. The particular test was done on shredded cabbage packed in a plastic bag, stored during 24 hours at 30 °C.

JP 04-295431 discloses that nisin and glycine are tested for bacteriocidal activity against S. typhimurium in citrate buffer at 37°C. Use in food is not mentioned. Glycine alone appears not to provide any substantial reduction in viable cell count.

Tsutsumi and Lee (J. of Japanese Society of Food Science and Technology 35 (1988), 545-551; XP002315135) disclose testing of the combined effect of pasteurization and addition of glycine, ethanol and sodium chloride on growth of e.g. S. typhimurium and E. coli in nutrient broth. No food is tested.

EP 1366664 discloses dipping sterilization of bean sprouts using a solution of a calcium oxide-glycine chelate. The amount of bacteria of the E. coli group was measured on the sprouts after a 30 or 60 minutes dipping period.

Some publications were found which describe the antibacterial effect of glycine, but its is not clear from the publication which bacteria were fought:
JP 08-154640 A discloses the use of an antimicrobial agent in foods to improve preservation wherein said agent contains 1-30 wt% acetic acid, with preferably 1-30 wt% of glycine and preferably 0.05-1 wt% of baked calcium. Gyoza (meat dumplings) and Harumaki (egg dough wrapped around minced vegetables, meat etc. in a small roll and fried in deep fat) are disclosed as food applications in which said antibacterial agent is used. The publication does not refer to specific bacteria against which said agent is effective.
JP 03 290174 A describes incorporating an unheated or low-temperature heat-treated food with glycine and further an organic acid such as acetic acid, adjusted to pH 5.5. or less and that is consequently put into a container to be subjected to high-pressure treatment by an aqueous pressure medium for sterilisation. The publication does not refer to food pathogenic bacteria against which glycine is effective. The publication does not refer to specific food and/or drink applications in which glycine is tested.

Another publication describes the use of glycine against molds and yeast and coliform: International Food Information, XP002315132, Hozova et al., "Prolonging the storage life of foods by non-traditional preservation methods", Slovak. Inst. Of Tech., Czechoslovakia, 1989; This article describes the effect of glycine on prolonging the storage life of preserved products. Raw pork goulash was used as test product. All samples were processed by heat-treatment. The results show that addition of glycine has an effect on the growth of moulds and yeasts that are present in raw pork that has subsequently been heat-treated and pasteurised. The part of the microorganisms involving coliform microorganisms and arerobic spore-forming microorganisms is not significantly influenced by the presence of glycine.

The present invention is directed to the use of glycine and/or (earth)alkali glycinate salts, ammonium glycinate and/or esters of glycine and C1-C8 alcohols as antibacterial agent against the gram-negative bacterial pathogens *Escherichia Coli, Enterobacter Sakazakii, Salmonella,* and *Campylobacter* in refrigerated foods or refrigerated drinks with the proviso that in addition to said glycine and/or glycine derivative no hetero-saccharide containing macromolecule is used, nor 1,5-D-anhydrofructose is used as antibacterial agent in said foods and drinks.

While in some the prior art documents complicated glycine compounds are mentioned which are stated to have antibacterial properties, the present invention is directed to the use of "simple" glycine compounds such as glycine and (earth) alkali salts of glycine, ammonium glycinate and esters of glycine and C1-C8 alcohols. With esters of glycine and C1-C8 alcohols is meant: esters of glycine and alcohols containing 1 up to 8 carbon atoms. Said carbon atom chains may be branched or straight. Examples of alkali glycinates are sodium glycinate and potassium glycinate; examples of earth alkali glycinates are magnesium glycinate and calcium glycinate; examples of glycinate esters of C1-C8 alcohols are methyl glycinate, ethyl glycinate, buthyl glycinate and hexyl glycinate. Sodium glycinate for example was found to be very effective as antibacterial agent for the gram-negative bacterial pathogens according to the invention.

While experiments in which additives such as acids, preservatives (e.g. sorbates) etcetera were added to a broth are often used as a prediction of its effect in real food and drink products, we have found that the effect of glycine in a broth does not give any indication of its effect in real food and drink products. The medium present in real food and drink products comprises proteins and fats, has a specific mobility of the liquids present, adsorption or incorporation of the glycine in the food product may occur. Without being committed to a theory, it is thought that the fact that glycine is an amino acid and a natural building block of food and drink products and is abundantly present in food constituents, causes it to interfere in a rather unpredictable way in real food and drink products.

In US 6200619, EP 1252827A1 and US 4820520 the combined uses of complicated antibacterial agents such as hetero-saccharide containing macromolecules and 1,5-D-anhydrofructose and glycine are mentioned. The present invention excludes the use of these complicated antibacterial agents.

We have found that glycine and/or (earth)alkali glycinate salts, ammonium glycinate and/or esters of glycine and C1-C8 alcohols can effectively be used as a sole antibacterial agent in concentrations that are still acceptable in food and drink products without negatively affecting the product quality with respect to for example taste and texture. We have found that glycine and/or (earth)alkali glycinate salts, ammonium glycinate and/or esters of glycine and C1-C8 alcohols can be used as sole antibacterial agent for preservation purposes and further to prevent the consequences of contamination of food and drink products as food poisoning by pathogenic bacteria due to temperature-abuse and/or contamination. It is not needed to add an auxiliary antibacterial agent to achieve the desired preservation effect in contrast to the results described in above-mentioned patents. This results not only in lower material costs but also in a higher product quality. Products are obtained with less auxiliary ingredients added while maintaining and even improving the quality and shelf life of said products. Further, this is in line with legislation that is aimed at minimisation of the use of additives in food and drink applications. Furthermore, the products obtained are also protected against the consequences of temperature-abuse or contamination.

We have found that glycine and/or (earth)alkali glycinate salts, ammonium glycinate and/or esters of glycine and C1-C8 alcohols can suitably be used in refrigerated food and drink products. Refrigerated food and drink products are considered those food and drink products which require being kept at lowered temperature to increase the microbial stability before (preparation for) consumption. This is usually at a temperature between 4 and 7 °C with occasional peaks to 12 °C. The use of glycine and/or (earth)alkali glycinate salts, ammonium glycinate and/or esters of glycine and C1-C8 alcohols has specific advantages in refrigerated products, because it is often not desired to apply other methods for preservation for this type of products due to deterioration of the product quality (taste, texture, flavour). The use of glycine and its derivatives according to the invention is suitable for controlling Salmonella in refrigerated products because it is well recognised that Salmonella remain viable for long periods of time in frozen foods and that survival is enhanced as the storage temperature increases. Further, refrigerated products are especially sensitive to temperature-abuse and/or contamination due to improper handling of the products. Temperature abuse may occur during transport of the product from the supplier to the store (e.g. improper cooling of the container of truck) but often also occurs during transport of the product from the store to home. Even in the case of incidental temperature increase of the refrigerated product, the food safety is ensured when glycine and/or (earth)alkali glycinate salts, ammonium glycinate and/or esters of glycine and C1-C8 alcohols is applied. Examples of such refrigerated products are meat products (cured and/or uncured, fresh and/or cooked), salads and other vegetable products, drinks and dairy products, semi-processed foods, convenient foods as e.g. ready-to-eat meals and dried food products.

Glycine and/or (earth)alkali glycinate salts, ammonium glycinate and/or esters of glycine and C1-C8 alcohols are found to be very effective as antibacterial agent in meat applications including fish and poultry, both cured and uncured meat and fresh meat. The gram-negative bacterial pathogens *Salmonella, Escherichia Coli, enterobacter sakazakii* and *Campylobacter* and in particular against *Salmonella typhimurium, Salmonella enteriditis, Escherichia Coli* O157:H7 and *Campylobacter jejuni* are often found in these types of applications. Above-mentioned bacteria are relatively insensitive to control of pH, water activity or addition of nitrite. Acid, salt or nitrite would have to be added in high concentrations in order to achieve some effect on bacteria growth, but these high concentrations negatively affect the product quality in terms of a bad taste and a loss of texture of the meat. The use of glycine and/or (earth)alkali glycinate salts, ammonium glycinate and/or esters of glycine and C1-C8 alcohols as antibacterial agent is found to be effective against said bacteria without loss of taste and without loss of texture. Furthermore, the above-mentioned methods and alternative processing techniques as e.g. heat treatment for preservation do not prevent food poisoning as consequences of temperature-abuse and/or contamination.

Examples of fresh meat are beef, beef steak, beef oxtails, neckbones, short ribs, beef roasts, stew meat, beef briskets, pork, pork chops, por steaks, cutlets, pork roasts, lamb, veal, game goat, filet américain, steak tartar, sushi, or carpaccio, chicken, turkey, duck and other poultry. Some of these fresh meat applications are to be consumed raw, while others are consumed after application of only partial heat treatment, intentionally applied as e.g. for medium cooked steak or unintentionally applied due to improper preparation or improper handling of the food products. The use of glycine and/or (earth)alkali glycinate salts, ammonium glycinate and/or esters of glycine and C1-C8 alcohols as antibacterial agent ensures food safety even in the case of partial heat-treatment.

The antibacterial activity not only includes bacteriostatic activity preventing further bacterial growth but also includes for some bacteria bacteriocidal activity that actually reduces the bacterial number.

Glycine concentrations of 0.5 to 3 wt% based on total weight of product were found to be effective as antibacterial agent for *E. Coli* and glycine concentrations of 0.5 to 1.5 wt% based on total weight of product were found to be suited in ensuring taste of the product.

Glycine concentrations of 0.5 to 3 wt% based on total weight of product were found to be effective as antibacterial agent for *E. Sakazakii* and glycine concentrations of 0.5 to 1.5 wt% based on total weight of product were found to be suited in ensuring taste of the product.

Glycine concentrations of 0.2 to 3 wt% based on total weight of product show antibacterial activity against *Salmonella,* and in particular *Salmonella typhimurium* and *Salmonella enteriditis.* Glycine concentrations of 0.2 to 1.5 wt% based on total weight of product were found to be suited in ensuring taste of the product.

Tests showed that a concentration of about 1 to 1.5 wt% of glycine based on total weight of product starts to affect the taste of said product. In said product no auxiliary antibacterial agents and no other taste affecting ingredients were present. A glycine concentration above 1.5 wt% based on total weight of the product gives the product a sweet taste. Dependent on the type of product this sweet taste is acceptable or not. In sweet drinks for example the sweetening effect of glycine is not considered a problem. Accordingly the maximally acceptable glycine concentration in terms of not negatively affecting taste can be increased to concentrations above 1.5 wt% glycine based on total weight of the product. Further, dependent on the presence of other taste affecting ingredients in the product as for example masking agents, the maximum concentration of glycine and/or (earth)alkali glycinate salts, ammonium glycinate and/or esters of glycine and C1-C8 alcohols can also be increased up to a point at which the taste starts to be negatively affected by the presence of glycine and/or said glycine derivative.
It was found that the use of glycine and/or its derivatives according to the invention as antibacterial agent in refrigerated foods and refrigerated drinks may be combined with one or more organic acids and/or one or more of their salts as for example benzoic acid, ascorbic acid, lactic acid, citric acid, acetic acid. The organic acid and/or its salt may be applied alone with glycine and/or derivatives according to the invention or may be applied in mixtures of organic acids and/or one or more of their salts as for example a mixture of potassium lactate and sodium diacetate in combination with glycine and/or its derivatives according to the invention.

Said combinations and/or mixtures of for example lactic acid and/or its derivatives according to the invention result in an antibacterial agent with various functional properties in addition to antibacterial activity. Examples of these added functional properties are (mineral) enrichment or fortification in general which has several positive health benefits, improvement of flavour, colour preservation and pH regulation. Examples of a lactic acid salt are sodium lactate, calcium lactate, potassium lactate, ferrous lactate, zinc lactate, magnesium lactate.

It was found that the use of glycine and/or (earth)alkali glycinate salts, ammonium glycinate and/or esters of glycine and C1-C8 alcohols as antibacterial agent in refrigerated foods and refrigerated drinks can be combined with lactic acid and/or its salt in concentrations of 0.2 to 3 wt% by weight based on said foods and drinks.

In some cases it is advantageous to combine the use of glycine and/or its derivatives according to the invention with one or more of the earlier mentioned processing techniques for preservation as e.g. heat treatment, irradiation and/or high-pressure treatment.
The present invention is further illustrated by the following examples, which are not to be construed as being limitative.

### EXAMPLES

### Comparative Example 1

### A. the inhibiting effect of glycine on Listeria monocytogenes in a broth

A *Listeria monocytogenes* (ATCC 7644) culture was prepared. The culture was transferred daily in screw capped tubes (100 x 16 mm) containing 10 ml brain heart infusion broth (Oxoid ® CM0225, Basingstoke, UK). Cultures were incubated at 30 °C without agitation.

### Broth preparation

Brain heart infusion broth was prepared with increasing amounts of glycine (ex Sigma ® G 7126). The glycine concentration from 0 to 400 mM in 50 mM steps. This resulted in 90 different media. The pH of the media ranged from 7 to 7.4 depending on the composition and was not adjusted. Media were prepared in 10 ml quantities and sterilised by filtration (Sartorius ® cellulose nitrate membranes 0.45 µm pore diameter). 300 µl of each medium was transferred to a panel of a sterile Bioscreen honeycombe 100 well plate. Completed well plates were frozen at -20 °C, vacuum-sealed in polyethylene bags and finally stored at -20 °C until further use.

### Bioscreen growth experiments

Well plates were quickly thawed and subsequently inoculated with 5 µl of a culture that was grown overnight in brain heart infusion broth using a sterile Hamilton 5 µl repeating dispenser (Hamilton ®, Bonaduz, Switserland). Growth rates were determined with a Bioscreen C (Labsystems ®, Helsinki, Finland) that kinetically measures the development of turbidity by vertical photometry. The plates were incubated for 16 - 24 hours at 37 °C, the optical density of the cultures was measured every 30 minutes at 420 - 580 nm using a wide band filter.

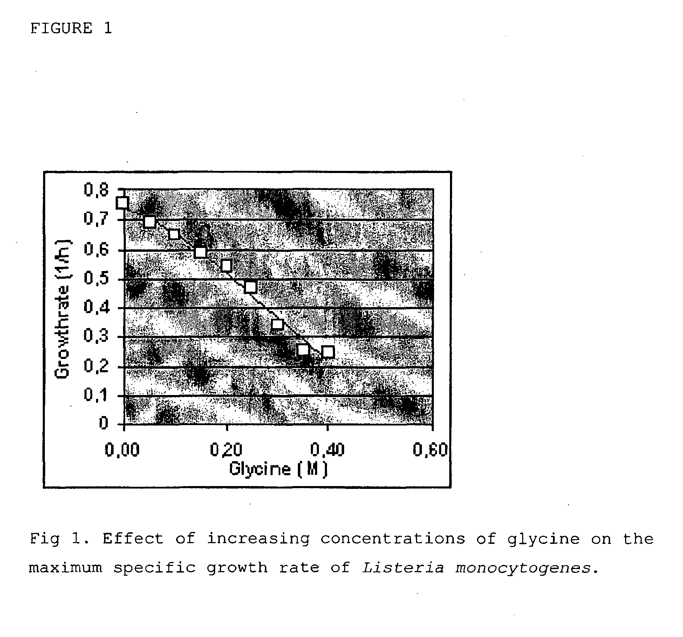

The Bioscreen measures at set time intervals the optical density of the cultures. From these data the Bioscreen calculates maximum specific growth rates. In figure 1, the effect of increasing concentrations of glycine on the maximum specific growth rate of *Listeria monocytogenes* is depicted.
The data show that the P0.5 value (the concentration causing half maximum inhibition) of *Listeria monocytogenes* for glycine was 0.20. Thus, in a broth glycine shows an inhibiting effect for *Listeria monocytogenes.*

### B1. the inhibiting effect of glycine on Listeria monocytogenes in cooked sausage A

Batches consisting of three cooked sausages, circa 500 g each, were prepared. The basic composition of the cooked sausage A was as given below:

**Basic composition cooked sausage A**

| Ingredient | % |
|---|---|
| Beef (10% fat) | 7.00 |
| Pork (8% fat) | 0.20 |
| Bacon (40% fat) | 69.00 |
| Water/ice | 9.00 |
| Colorozo salt | 2.00 |
| Spices | 0.35 |
| Phosphate | 0.35 |
| Sodium ascorbate | 0.05 |
| Sodium glutamate | 0.05 |
| Wheat starch | 2.00 |

The sausages were stored for 1 day at 0 °C until further examination.

The cooked sausages were placed in the bowl of a disinfected laboratory cutter (Scharf®), cut into small pieces and inoculated with a suspension of *Listeria monocytogenes,* type 4a (ATCC 19114) mentioned bacteria to a final level of about 10² and 10⁴ per g product respectively. After inoculation, the sausages were minced and homogenised for 2 minutes. Subsequently, the minced product was divided into portions of 40 g and vacuum packaged in plastic pouches with an oxygen permeability of less than 5.0 x 10⁻¹¹ m³. m⁻². Pa⁻¹. day⁻¹ at 20°C. The packages obtained were stored at 7° C for up to 21 days. During the experiment the temperatures were registered using a data logger.

At appropriate time intervals, samples of minced cooked sausage of each batch were taken in duplicate for microbiological analyses. From each single package a sample of 20 g was taken aseptically, diluted 10-fold in physiological peptone saline (PPS) and homogenised in a stomacher for 1 minute. Additional serial dilutions were made in PPS.
Numbers of *L. monocytogenes* were determined using Palcam agar (Oxoid ® CM877 and SR150). Plates were incubated at 37°C for 2 days

The results of the microbiological analyses of the cooked sausages A during vacuum packed storage at 7°C are given in TABLE I.

**TABLE I Results of L. monocytogenes counts on vacuum packed cooked sausages with glycine additive during storage at 7°C**

| **Additive** | **Bacterial counts in log cfu per g of product after storage during** | | | | | | |
|---|---|---|---|---|---|---|---|
| | **0 days** | **4 days** | **7 days** | **10 days** | **14 days** | **17 days** | **21 days** |
| Control (no additive) | 4.71 | 4.79 | 5.30 | 6.17 | 7.36 | 6.26 | 6.72 |
| | 4.64 | 4.84 | 5.18 | 6.21 | 7.19 | 6.90 | 7.17 |
| 1.0 wt% glycine | 4.53 | 4.78 | 5.28 | 5.75 | 7.18 | 6.91 | 7.21 |
| | 4.49 | 4.73 | 5.12 | 6.12 | 6.86 | 7.00 | 7.01 |

The addition of 1 wt% glycine to cooked sausages does not have an inhibiting effect on Listeria monocytogenes, while the effect was found in a broth.

### B2 the inhibiting effect of glycine on Listeria monocytogenes in cooked sausages B

The same experiments as described in B1 were conducted on sausages with a different composition: sausage B. The basic composition of the cooked sausage B was as given below:

**Basic composition cooked sausage B**

| Ingredient | % |
|---|---|
| Beef (20% fat) | 7 |
| Pork (8% fat) | 10.2 |
| Bacon (30% fat) | 69 |
| Water/ice | 9.00 |
| Colorozo | 2.0 |
| Spices | 0.35 |
| Phosphate | 0.35 |
| Sodium ascorbate | 0.05 |
| Sodium glutamate | 0.05 |
| Wheat starch | 2.00 |

The results of the microbiological analyses of the cooked sausages B during vacuum packed storage at 7°C are given in TABLE II.

**TABLE II Results of L. monocytogenes counts on vacuum packed cooked sausages B with glycine additive during storage at 7°C**

| **Additive** | **Bacterial counts in log cfu per g of product after storage during** | | | | | | |
|---|---|---|---|---|---|---|---|
| | **0 days** | **7 days** | **12 days** | **18 days** | **27 days** | **41 days** | **60 days** |
| Control (no additive) | 2.32 | 2.34 | 2.78 | 3.52 | 4.51 | 6.74 | 8.81 |
| | 2.20 | 2.49 | 2.77 | 3.69 | 4.77 | 6.53 | 8.72 |
| 1.0 wt% glycine | 2.36 | 2.45 | 2.52 | 3.10 | 4.20 | 6.40 | 8.15 |
| | 2.28 | 2.43 | 2.63 | 2.98 | 4.36 | 6.45 | 8.15 |

Again, the addition of 1 wt% glycine to cooked sausages does not have an inhibiting effect on Listeria monocytogenes, while the effect was found in a broth.

### Example 2

Frozen ground beef was defrosted and divided into portions of 1.7 kg and mixed with different concentrations of glycine, 0.5 wt%, 1.0 wt% and 1.5 wt% based on total weight of meat portion. Subsequently the meat was minced once through a 6 mm plate in a disinfected meat mincer.

Each portion (1.5 kg) was inoculated with a suspension of E. Coli O157:H7 (ATCC 43895) to a final level of about 104 cfu per g of product. Prior to inoculation the culture with E. *Coli* O157:H7, kept on slant, was pre-cultivated twice in Brain Heart Infusion (BHI, Oxoid ® CM 225) during 24 hours at 30 °Celsius. The full-grown culture was diluted in physiological peptone saline (PPS) to contain the desired level inoculation. The inoculated meat was minced twice through a 3 mm plate after which the ground beef was packed in portions of 80 g in a modified atmosphere (MAP) consisting of 70% O₂ and 30% CO₂ with a gas volume of about 120 ml. All packages were stored at 12 °Celsius during 12 days. The temperature during the experiment was registered using a data logger.

Samples of each portion of ground beef were taken in duplicate for microbiological analyses at appropriate time intervals. A sample of 20 g was taken aseptically from each portion. The sample was diluted 10-fold in physiological peptone saline (PPS) and homogenised in a stomacher for 1 minute. Additional serial dilutions were made in PPS. Numbers of E. *Coli* O157:H7 bacteria were determined using Sorbitol MacConkey agar (SMAC, Oxoid ® CM813) as mentioned in NEN-ISO 16649-2:2001. The plates were incubated at 42 °Celsius during 1 day.

TABLE III shows the results (in duplicate) of the microbiological analyses of ground beef inoculated with *E. Coli* O157:H7 and with three different concentrations of glycine added during storage in MAP at 12 °Celsius.

**TABLE III: Results of E.Coli O157:H7 bacterial count on ground beef with different glycine concentrations in MAP during storage at 12 °Celsius.**

| **Additive** | **Bacterial counts in log cfu per g of product after storage during** | | | | | |
|---|---|---|---|---|---|---|
| | **0 days** | **3 days** | **5 days** | **7 days** | **10 days** | **12 days** |
| Control (no additive) | 3.96 | 5.67 | 5.46 | 5.26 | 5.72 | 5.54 |
| | 4.08 | 4.94 | 5.34 | 5.92 | 5.53 | 5.58 |
| 0.5 wt% glycine | 4.03 | 4.26 | 3.78 | 3.90 | 3.86 | 3.30 |
| | 3.98 | - | 4.38 | 4.28 | 3.73 | 3.49 |
| 1.0 wt% glycine | 4.00 | 4.20 | 4.26 | 3.36 | 2.30 | 2.58 |
| | 4.00 | 3.82 | 3.95 | 3.51 | - | 1.48 |
| 1.5 wt% glycine | 4.03 | 3.94 | 2.85 | 2.30 | 2.00 | 1.30 |
| | 4.05 | 3.87 | 2.85 | 2.00 | 1.70 | 1.78 |

The results show that a concentration of 0.5 wt% of glycine based on total weight of product has antibacterial activity against E.Coli O157:H7. Concentrations of 1.0 wt% of glycine based on total weight of product show a clear bacteriocidal activity against E.Coli O157:H7 and even reduce the bacterial number from 4 to 2 log cfu per g of product in 7 days of storage.

### Example 3

A culture of *E.Coli* O157:H7 (ATCC:700728) was pre-cultivated on BHI broth (Brain Heart Infusion, Oxoid ® CM225) and incubated for 24 h. at 30 °C. The culture was 50 fold diluted in peptone physiological salt (PPS).

3000 gram of irradiated ground beef was divided into 3 samples and mixed with glycine thoroughly to prepare samples with 0, 1.0, and 1.5 wt% glycine, respectively. Subsequently, each sample was divided into 30 portions of 25 grams. The portions were put into a sterile bag (Interscience ®bagfilters, 400 ml, Model P) and inoculated with the diluted culture broth to a final level of about 10⁵ cfu/gr product (250 µl culture/PPS). The culture and samples were mixed thoroughly by hand. The bags were sealed directly afterwards under aerobic conditions. Finally the samples were incubated at 8 °C.

At appropriate time-intervals, portions of each concentration were diluted 2-fold in PPS and homogenized in a stomacher (Lab Blender ® 400) for 1 minute. Additional serial dilutions were made in PPS.

The dilutions were brought on "Violet Red Bile Glucose Agar" (Oxoid ® CM485) and incubated for 24 hours at 30 °C.

In TABLE IV the results are compiled of the microbiological analyses of irradiated ground beef inoculated with *E. Coli* O157:H7 and with three different concentrations of glycine added during storage at 8 °Celsius.

**TABLE IV: Results of E.Coli O157:H7 bacterial count on irradiated ground beef with different glycine concentrations during storage at 8 °Celsius.**

| **Additive** | **Bacterial counts in log cfu per g of product after storage during** | | | |
|---|---|---|---|---|
| | **0 days** | **3 days** | **6 days** | **13 days** |
| Control (no additive) | 5.5 | 5.6 | 6.2 | 6.5 |
| 1.0 wt% glycine | 5.4 | 5.2 | 4.5 | 5.5 |
| 1.5 wt% glycine | 5.4 | 4.1 | 3.2 | 0.0 |

A small inhibiting effect was seen with the addition of 1,0 % of glycine, whereas the addition of 1,5 % glycine gave a bacteriocidal effect.

### Example 4

Fresh pork meat from shoulders was minced once through a 12 mm plate in a disinfected meat mincer and manually homogenized. The pork meat was divided into 7 portions of 2.5 kg and mixed with different concentrations of glycine, 0.5wt%, 1.0wt% and 1.5 wt% based on total weight of meat portion.

Subsequently the meat was minced once through a 6 mm plate. Each batch (2.3 kg) was inoculated with 10 ml of a suspension of *E. Coli* O157:H7 (ATCC 43895) to a final level of about 10⁴ cfu per g product. Before inoculation the culture, kept on slant, was pre-cultivated twice in Brain Heart Infusion (BHI, Oxoid ® CM225) for 24 hours at 30°C. The full grown culture was diluted in physiological peptone saline (PPS) to obtain the desired level.

The inoculated meat was minced again twice through a 3 mm plate after which the ground pork was packed in 24 portions of 80 g in a modified atmosphere (MAP), consisting of 80% O₂ and 20% CO₂ with a gas volume of about 120 ml. Subsequently 9 packages were stored at 12°C for up to 12 days. During the experiment the temperatures were registered using a data logger.

At appropriate time intervals, samples of ground pork of each batch were taken in duplicate for microbiological analyses. From each single package a sample of 20 g was taken aseptically, diluted 10-fold in (PPS) and homogenised in a stomacher for 1 minute. Additional serial dilutions were made in PPS. Numbers of *E. Coli* O157:H7 bacteria were determined using CT-SMAC (Sorbitol MacConkey Agar, Oxoid ® CM813 and Cefixime-Tellurite supplement, Oxoid ® SR172) as mentioned in NEN-ISO 16649-2:2001. The plates were incubated at 42°C for 1 day.

TABLE V shows the results ( in duplicate) of the microbiological analyses of ground pork inoculated with *E. Coli* 0157:H7 and with three different concentrations of glycine added during storage at 12 °C.

**TABLE V: Results of E.Coli O157:H7 bacterial count on ground pork with different glycine concentrations in MAP during storage at 12 °Celsius.**

| **Additive** | **Bacterial counts in log cfu per g of product after storage during** | | | | |
|---|---|---|---|---|---|
| | **0 days** | **3 days** | **6 days** | **10 days** | **12 days** |
| Control (no additive) | 3.68 | 5.28 | 7.38 | 7.43 | 7.29 |
| | 3.72 | 5.57 | 7.06 | 7.18 | 7.14 |
| 0.5 wt% glycine | 3.75 | 5.65. | 7.45 | 7.04 | 6.56 |
| | 3.66 | 5.80 | 7.28 | 7.08 | 6.66 |
| 1.0 wt glycine % | 3.51 | 5.01. | 6.38 | 6.15 | 5.18 |
| | 3.51 | 5.05 | 6.51 | 5.95 | 4.70 |
| 1.5 wt% glycine | 3.81 | 2.30 | 2.61 | 1.00 | 1.00 |
| | 3.83 | 2.00 | 2.59 | 1.00 | 1.00 |

After 5 days storage at 12°C minor differences in appearance of ground pork were noticed. After 7 day ground pork samples without additives and with lower quantities of glycine showed a grey colour. After 10 days all products were judges as being grey.

### Example 5

The effect of 0.5, 1.0, 1.5 % (w/t) glycine was tested on *E.Coli* O157:H7 in sterilized milk. A culture *E. Coli* O157:H7 (ATCC 700728) was pre-cultivated twice on BHI broth (Oxoid® CM225) and incubated for 24 h. at 30 °C. The culture was 2 times 10 fold diluted in Peptone physiological salt (PPS).

4 Samples of 250 gram were made by mixing 0, 0.5, 1.0, 1.5 % (w/t) glycine with sterilized milk (semi skimmed, Landhof®). The samples were put into a vacuum bag (Hevel®, S.E. plus 0,1, 300 x150 mm). 0,5 ml of the diluted culture media was added to the samples. Subsequently, the samples were stomachered for 1 minute (Lab Blender ® ® 400). Each sample was divided into 8 portions of 5 ml and put into a sterile tube (150 x 17/18 mm). Finally, the tubes were stored at 11 °C for certain days.

At appropriate time intervals, 2 tubes of each sample were taken for microbiological analyses. Each tube was mixed well by using a vortex (Scientific Industries ®, Vortex Genie 2). Serial dilutions (10 fold) were made in PPS.

The milk and serial dilutions were brought on VRBG plates (Oxoid®, CM485). Colony counts of E.Coli were done after 24 hours of incubation at a temperature of 30 °C.

In TABLE VI the resulted the plate counts of E. *Coli* O157:H7 ( VRBG agar) inoculated on sterilised milk with different concentrations of glycine are given.

**TABLE VI: Plate count of E. Coli O157:H7 (VRBG agar) inoculated on sterilized milk with different concentrations of glycine at 11°C**

| | **Bacterial counts in log CFU per gr product after storage during** | | | |
|---|---|---|---|---|
| **concentration** | **0 Days** | **2 Days** | **6 Days** | **16 Days** |
| **Control (0%)** | 4.18 | 5.71 | 7.78 | 8.37 |
| **1% Gly** | 4.20 | 5.06 | 3.84 | 5.97 |
| **1,5% Gly** | 4.15 | 0.00 | 0.00 | 0.00 |

The results show that *E.Coli* is effectively controlled in sterilized milk when at least 1 wt% glycine is added.

### Example 6

In this experiment an inoculation study is done with *E. Coli* O157:H7 in a commercially "ready to eat meal" (Tagliatelle with Carbonara sauce) bought at a take away restaurant.

Four ready to eat pasta's (Tagliatelle with Carbonara sauce) were bought at a take-away restaurant. The measured pH and Aw (water activity) of the product were 5,93 and 0.996 respectively. Food grade glycine was used as antibacterial agent.

A culture *E. Coli* O157:H7 (ATCC 700728) was pre-cultivated twice on BHI broth (Brain Heart Infusion, Oxoid ® CM225) and incubated for 24 h. at 30 °C. The cultures were 2 times 10 fold and 1 time 11 fold diluted in Peptone physiological salt (PPS).

The pasta (1200 gram) was frozen for 3 hours at -20 °C and homogenized afterwards with a kitchen blender (Moulinex ®, Ovatio 3). The pasta was divided into samples and mixed with glycine thoroughly to prepare samples of 240 g each with 0.0, 0.5, 1.0, and 1.5 wt% glycine respectively.

Each sample was sterilized for 20 minutes at 121 °C and cooled afterwards until 11 °C. Subsequently, each sample was divided into 10 portions of 20 grams and put into sterile bags (Interscience ® bagfilters, 400 ml, Model P).

The portions were inoculated with diluted (1100-fold) culture broth to a final level of about 10⁴ cfu/gram product (~200 µl PPS). The portions were sealed aerobically and stored at 11 °C for up to 11 days.

From each concentration two portions were diluted 2-fold in PPS and homogenized in a stomacher (Lab Blender ® 400) for 1 minute. Additional serial dilutions were made in PPS.

The dilutions were brought on "Violet Red Bile Glucose Agar" (Oxoid ®, CM485) plates and incubated for 24 hours at 30 °C.

The results of the microbiological analyses of E. Coli O157:H7 on Tagliatelle with Carbonara sauce at 11 °C are given in TABLE VII.

**TABLE VII: Plate count of E. Coli O157:H7 inoculated in a ready "to eat meal" with different concentrations of glycine at 11 °C.**

| | Bacterial counts in log CFU per gr product after storage during | | | | |
|---|---|---|---|---|---|
| **concentration** | **0 days** | **1 day** | **4 days** | **7 days** | **11 days** |
| **Control (0%)** | 3.96 | 4.24 | 7.12 | 7.90 | 9.35 |
| **0,5% Gly** | 4.06 | 4.21 | 6.96 | 7.95 | 8.69 |
| **1,0% Gly** | 4.13 | 4.07 | 5.39 | 6.11 | 5.78 |
| **1,5 % Gly** | 4.10 | 3.96 | 5.27 | 3.13 | 0.00 |

A bacteriostatic effect of glycine was measured at a concentration of 1,0% (w/w) glycine.
Glycine at a concentration of 1,5% (w/w) gave even a bacteriocidal effect.

### Example 7

Six batches of powdered infant formula, circa 1500 g each, were stored for 4 days at room temperature before further examination.
To each batch of powdered infant formula specific amounts of glycine were added to form samples with 0.0, 0.5, 1.0, 1.5, and 3.0 wt% glycine respectively. The samples were inoculated with a mixture of two *Enterobacter sakazakii* strains (ATCC 29544 (LMG 5740) and LMG 2759). Before inoculation the culture, kept on slant in refrigerator, was pre-cultivated twice in Brain Heart Infusion broth (BHI, Oxoid ® CM225) for 24 hours at 30°C. The full grown culture was diluted in physiological peptone saline (PPS) to obtain a suspension at the desired level.

A sample of infant formula (ca. 1000 ml) of each composition was inoculated with 10 ml of *E. sakazakii* suspension to a final level of about 10³ cfu per g product. After inoculation, the infant formula was homogenized by stirring. Subsequently, the product was divided into 12 portions of 50 ml in plastic sample trays (180 ml) with an air layer sufficient to maintain aerobically conditions after closure. The sample trays obtained were stored at 12°C for up to 14 days. During the experiment the temperatures in the storage were registered.

At appropriate time intervals, samples of infant formula of each batch were taken in duplicate for microbiological analyses. Each single sample tray was homogenized by shaking. Additional serial dilutions were made in PPS.
The numbers of *E. sakazakii* were determined using Violet Red Bile Glucose Agar (VRBGA, Oxoid ® CM485) as mentioned in ISO 5552:1997. The plates were incubated at 37°C for 1 day.
The results of the microbiological analyses of the reconstituted infant formula with different concentrations of glycine during aerobically packed storage at 12°C are given in TABLE VIII.

**TABLE VIII: Results of E. sakazakii counts of reconstituted infant formula with different concentrations of glycine during aerobically storage at 12°C**

| **Additive** | **Bacterial counts in log cfu per g of product after storage during** | | | | |
|---|---|---|---|---|---|
| | **0 days** | **3 days** | **5 days** | **7 days** | **14 days** |
| Control (no additive) | 2.76 | 3.23 | 5.12 | 7.40 | 8.28 |
| | 2.92 | 3.15 | 5.30 | 7.28 | 8.24 |
| 0.5 wt% glycine | 2.93 | 1.85 | 1.95 | 3.38 | 5.79 |
| | 2.74 | 1.85 | 2.47 | 3.45 | 5.23 |
| 1.0 wt% glycine | 2.95 | 0.00 | 0.00 | 0.00 | 0.00 |
| | 3.00 | 0.00 | 0.00 | 0.00 | 0.00 |
| 1.5 wt% glycine | 2.68 | 0.00 | 0.00 | 0.00 | 0.00 |
| | 2.65 | 0.00 | 0.00 | 0.00 | 0.00 |
| 3.0 wt% glycine | 2.59 | 0.00 | 0.00 | 0.00 | 0.00 |
| | 2.30 | 0.00 | 0.00 | 0.00 | 0.00 |

The results show that *E. sakazakii* were inhibited in infant formula containing glycine starting at a quantity of 0.5%. Inactivation of *E. sakazakii* to non-detectable levels was observed at quantities of 1% or higher.

### Example 8

Six batches consisting of three cooked chicken sausages, circa 500 g each, were prepared with the following composition:

**Basic composition cooked sausage**

| Ingredient | % |
|---|---|
| Chicken breast (1% fat) | 91.15 |
| Phosphate | 0.35 |
| Salt (NaCl) | 1.50 |
| Water/ice | 7.00 |

Each cooked chicken sausage was inoculated with a cocktail of *Salmonella*
*typhimurium* (M90003246/0550). Before inoculation the cultures, kept on slants, were pre-cultivated twice in Brain Heart Infusion (BHI, Oxoid ® CM225) for 24 hours at 30 °C. The full grown cultures were diluted in physiological peptone saline (PPS) to obtain a mixture at desired level.
Two sausages (ca. 1000 g) of each composition were placed in the bowl of a disinfected laboratory cutter (Scharf®), cut into small pieces and inoculated with 10 ml of a suspension of *L. monocytogens* and *Salmonella* to a final level of about 10² or 10³ per g product respectively. After inoculation, the cooked chicken sausages were minced and homogenised for 2 minutes. Subsequently, the minced product was divided into portions of 40 g and vacuum packaged in plastic pouches with an oxygen permeability of less than 5.0 x 10⁻¹¹ m³. m⁻². Pa⁻¹. day⁻¹ at 20°C. The packages obtained were stored at 12°C for up to 21 days. During the experiment the temperatures were registered using a data logger.

At appropriate time intervals, samples of minced cooked chicken sausage of each batch were taken in duplicate for microbiological analyses. From each single package a sample of 20 g was taken aseptically, diluted 10-fold in PPS and homogenised in a stomacher for 1 minute.

Additional serial dilutions were made in PPS. Numbers of *Salmonella* were determined using Violet Red Bile Glucose Agar (Oxoid ® CM485). Plates were incubated at 37°C for 1 day.

The results of the microbiological analyses of the cooked chicken sausages with different additives during vacuum packed storage at 12°C are given in TABLE XIV

**TABLE XIV Results of Salmonella spp. counts on vacuum packed cooked chicken sausages with different additives during storage at 12°C.**

| **Additive** | **Bacterial counts in log cfu per g of product after storage during** | | | | |
|---|---|---|---|---|---|
| | **0 days** | **4 days** | **7 days** | **14 days** | **20 days** |
| Control (no additive) | 2.32 | 5.72 | 7.40 | 8.29 | 8.58 |
| | 2.54 | 5.82 | 7.41 | 8.27 | 8.46 |
| 0.5 wt% glycine | 2.38 | 1.00 | 0.48 | 2.28 | 1.00 |
| | 2.32 | 1.00 | 0.60 | 1.71 | 2.23 |
| 0.5 wt% Naglycinate | 2.36 | 1.00 | 0.48 | 0.00 | 0.00 |
| | 2.43 | 1.00 | 0.30 | 0.00 | 0.00 |
| 1.0 wt% glycine | 2.40 | 1.00 | 0.30 | 0.00 | 0.00 |
| | 2.38 | 1.00 | 0.00 | 0.00 | 0.00 |
| 1.0 wt% Naglycinate | 2.18 | 1.00 | 0.00 | 0.00 | 0.00 |
| | 2.00 | 1.00 | 0.00 | 0.00 | 0.00 |
| 2.5 wt% glycine | 2.40 | 1.00 | 0.60 | 0.30 | 0.00 |
| | 2.34 | 1.00 | 0.30 | 0.30 | 0.00 |

The results show that glycine concentrations of 0.5 wt% or higher based on total weight of product have antibacterial activity against *Salmonella typhimurium* in cooked chicken. Sodium glycinate clearly acts as antibacterial agent in concentrations of 0.5 wt% or higher based on total weight of product. Sodium glycinate has a strong bacteriocidal effect and reduces the bacterial number to below 1 log cfu per g of product in only 4 days of storage at 12 °Celsius.

### Example 9

Batches consisting of two vacuum packs with irradiated ground chicken, circa 1500 g each, were prepared with respectively 0.0, 0.5, 1.0, and 1.5 wt% glycine as antibacterial agent. The ground chicken batches were stored for 1 day at 0°C until further examination.

Each batch of ground chicken was inoculated with a *Salmonella typhimurium* (M90003246/0550). Before inoculation the culture, kept on slant in refrigerator, was pre-cultivated twice in Brain Heart Infusion broth (BHI, Oxoid ® CM225) for 24 hours at 30°C. The full grown culture was diluted in physiological peptone saline (PPS) to obtain a suspension at the desired level.
A quantity of ground chicken (ca. 1000 g) of each composition was put in a disinfected tray and inoculated with 10 ml of *S. typhimurium* suspension to a final level of about 10⁴ cfu per g product. After inoculation, the ground chicken was homogenized manually. Subsequently, the product was divided into portions of 50 g and packaged aerobically in plastic pouches (16 x 11 x 1.5 cm, ca 250 ml). The packages obtained were stored at 30°C for up to 24 hours and at 7°C for up to 30 days. During the experiment the temperatures in the storage were registered.

At appropriate time intervals, samples of ground chicken of each batch were taken in duplicate for microbiological analyses. From each single package a sample of 20 g was taken aseptically, diluted 10-fold in PPS and homogenized in a stomacher for 1 minute.
Additional serial dilutions were made in PPS. Numbers of *S. typhimurium* were determined using Violet Red Bile Glucose Agar (VRBGA, Oxoid ® CM485) as mentioned in ISO 5552:1997. Plates were incubated at 37°C for 1 day.

The results of the microbiological analyses of the ground chicken with different amounts of glycine during aerobically packed storage at 7°C are given in TABLE X

**TABLE X Results of S. typhimurium counts on aerobically packed ground chicken with amounts of glycine during storage at 7°C**

| **Additive** | **Bacterial counts in log cfu per g of product after storage during** | | | | |
|---|---|---|---|---|---|
| | **0 days** | **3 days** | **7 days** | **14 days** | **30 days** |
| Control (no additive) | 3.73 | 3.85 | 3.88 | 4.45 | 7.24 |
| | 3.88 | 3.83 | 3.83 | 4.20 | 6.59 |
| 0.5 wt% glycine | 3.69 | 3.76 | 3.70 | 3.63 | 3.51 |
| | 3.86 | 3.88 | 3.64 | 2.60 | 4.02 |
| 1.0 wt% glycine | 3.72 | 3.34 | 2.97 | 2.18 | 1.78 |
| | 3.74 | 3.58 | 2.96 | 1.85 | 1.60 |
| 1.5 wt% glycine | 3.85 | 3.30 | 3.00 | 2.04 | 1.70 |
| | 3.83 | 3.54 | 3.08 | 1.85 | 1.78 |

During storage at 7°C development of *S. typhimurium* was inhibited in ground chicken containing glycine in quantities of 0.5% during the entire storage period of 30 days. In ground chicken containing glycine in quantities of 1 to 1.5% a two log reduction of *S. typhimurium* was observed during that period.

### Example 10

In example 10 an inoculation study is done with *Salmonella Enteritidis* on pasteurized egg yolk. To this end, approximately 2 kilogram of egg yolk was split from 300 eggs and filtered. To the egg-yolk glycine was added so that samples of 400 gram each were prepared in a sterile jar containing 0.0, 0.5, 1.0 and 1.5wt% glycine. The glycine and egg-yolk were mixed well by shaking. The samples were pasteurized 60 min. at 60 °C.

The egg yolk was inoculated with a mixture of two *Salmonella Enteritidis* strains (ATCC: 13076 and RKI 01-02637). From a stock culture of *S. Enteritidis,* 4 ml was pre-cultivated on 100 ml TSB (Biokar ® BK046HA) at 30 °C during 24 hours. From this culture 0.1 ml was pre-cultivated again on 100 ml TSB at 30°C during 18 hours. Each sample of 400 gram egg-yolk was inoculated with 1 ml of TSB and mixed manually by shaking (5 minutes). Subsequently, each sample was divided into portions of 20 grams and stored aerobically in plastic boxes at a temperature of 7°C, 11 °C and 12°C.

Both the samples incubated at 7 °C and at 12 °C were analyzed for microbiological counts after several days.

For each sample 20 gram of egg yolk was weighed from a box and put into a stomacher bag. Subsequently, the sample was homogenized with 90 ml of BPW (Biokar ® BK018HA) by using a stomacher (Colworth ®, 20 sec). Additional serial dilutions were made in PPS (Biokar ® BK014HA).

The dilutions were brought on Brilliant green agar plates (Biokar ® BK091HA) according to ISO 6579:2002.
The results of the microbiological analyses of S. *Enteritidis* in egg yolk at 7 °C, and 12 °C are compiled in TABLES XI and XII.

**TABLE XI. Plate count of Salmonella Enteritidis inoculated on egg-yolk with different concentrations of glycine at 7°C.**

| **Concentration** | **Day 0** | **Day 3** | **Day 7** | **Day 14** | **Day 21** |
|---|---|---|---|---|---|
| **Glycine** | **Log CFU/ml** | **Log CFU/ml** | **Log CFU/ml** | **Log CFU/ml** | **Log CFU/ml** |
| 0% | 6.7 | 6.2 | 5.8 | 5.7 | 5.8 |
| 0.5% | 6.6 | 5.4 | 4.8 | 3.7 | 4.0 |
| 1.0% | 6.5 | 4.9 | 4.1 | 3.7 | 3.7 |
| 1.5% | 6.5 | 5.0 | 4.1 | 4.2 | 3.8 |

**TABLE XII: Plate count of Salmonella Enteritidis inoculated on egg-yolk with different concentrations of glycine at 12°C.**

| **Concentration** | **Day 0** | **Day 1** | **Day 3** | **Day 7** | **Day 14** |
|---|---|---|---|---|---|
| **glycine** | **Log CFU/ml** | **Log CFU/ml** | **Log CFU/ml** | **Log CFU/ml** | **Log CFU/ml** |
| 0% | 6.7 | 8.3 | 7.6 | - | 8.8 |
| 0.5% | 6.6 | 7.3 | 7.0 | - | 7.6 |
| 1.0% | 6.5 | 5.0 | 3.9 | 3.4 | 3.3 |
| 1.5% | 6.5 | 5.0 | 3.5 | 3.1 | 3.0 |

At 7 °C the survival rate of *Salmonella Enteritidis* is weakened when 0,5 % glycine is added. At 12 °C a slight inhibiting effect was observed when 0,5 % glycine was added. At higher concentrations the inhibition was stronger.

### Example 11

In example an inoculation study is done with *Salmonella Enteritidis* on pasteurized egg yolk. To this end, approximately 1 kilogram of egg yolk was split from 70 eggs and filtered. To the egg-yolk glycine was added so that samples of 150 ml each were prepared in a sterile jar containing 0.0, 0.5, 1.0 and 1.5wt% glycine. The glycine and egg-yolk were mixed well by shaking. The samples were pasteurized 60 min. at 60 °C.

The egg yolk was inoculated with a *Salmonella Enteritidis* (ATCC: 13076). A culture of *S. Enteritidis* was pre-cultivated on BHI (Oxoid ® CM 225) at 30 °C during 24 hours. The cultures are 10 fold diluted in Peptone physiological salt (PPS). Each sample was inoculated with 0.6 ml culture tube media mixed manually by shaking (5 minutes).
Subsequently, each sample was divided into portions of 5 ml stored at a temperature of 11 °C.

The samples incubated at 11 °C were analyzed for microbiological counts after several days.

From each concentration a 10-fold dilution was made in PPS The dilutions were brought on "Violet Red Bile Glucose Agar" (Oxoid ®, CM485) plates and incubated for 24 hours at 30 °C.
The results of the microbiological analyses of S. *Enteritidis* in egg yolk at 11 °C are compiled in TABLE XIII.

**TABLE XIII: Plate count of Salmonella Enteritidis inoculated on egg-yolk with different concentrations of glycine at 11°C.**

| **Concentration** | **Day 0** | **Day 4** | **Day 11** |
|---|---|---|---|
| **glycine** | **Log CFU/ml** | **Log CFU/ml** | **Log CFU/ml** |
| 0% | 5.32 | 7.23 | 8.33 |
| 0.5% | 5.28 | 7.23 | 6.98 |
| 1.0% | 5.31 | 3.08 | 0.00 |
| 1.5% | 5.33 | 0.00 | 0.00 |

## Claims

1. The use of glycine and/or (earth)alkali glycinate salts, ammonium glycinate and/or esters of glycine and C1-C8 alcohols as antibacterial agent against the gram-negative bacterial food pathogens *Escherichia Coli, Enterobacter Sakazakii, Salmonella,* and *Campylobacter* in refrigerated foods and/or refrigerated drinks with the proviso that in addition to said glycine and/or glycine derivative no hetero-saccharide containing macromolecule is used, nor 1,5-D-anhydrofructose is used as antibacterial agent in said foods and drinks.

2. The use of glycine and/or or (earth)alkali glycinate salts, ammonium glycinate and/or esters of glycine and C1-C8 alcohols according to claim 1 as sole antibacterial agent in foods and/or drinks.

3. The use of glycine of glycine and/or (earth)alkali glycinate salts, ammonium glycinate and/or esters of glycine and C1-C8 alcohols according to claim 1 or 2 as antibacterial agent in meat applications.

4. The use of glycine of glycine and/or (earth)alkali glycinate salts, ammonium glycinate and/or esters of glycine and C1-C8 alcohols according to claim 1 or 2 as antibacterial agent in fresh meat applications

5. The use of glycine and/or (earth)alkali glycinate salts, ammonium glycinate and/or esters of glycine and C1-C8 alcohols according to any of claims 1 to 3 as antibacterial agent against *Salmonella* bacteria and preferably against *Salmonella typhimurium* and/or *Salmonella enteriditis.*

6. The use of glycine and/or (earth)alkali glycinate salts, ammonium glycinate and/or esters of glycine and C1-C8 alcohols according to any of claims 1 to 3 as antibacterial agent against *Escherichia Coli* bacteria and preferably *against Escherichia Coli O157:H7.*

7. The use of glycine and/or (earth)alkali glycinate salts, ammonium glycinate and/or esters of glycine and C1-C8 alcohols according to any of claims 1 to 6 as antibacterial agent in foods and/or drinks combined with one or more organic acids and/or one or more of their salts.

8. The use of glycine and/or (earth)alkali glycinate salts, ammonium glycinate and/or esters of glycine and C1-C8 alcohols according to claim 7 as antibacterial agent in foods and/or drinks combined with lactic acid and/or its lactate salt.

9. The use of glycine and/or (earth)alkali glycinate salts, ammonium glycinate and/or esters of glycine and C1-C8 alcohols according to any of claims 1 to 8 as antibacterial agent in concentrations of 0.5 to 3 wt% and preferably 0.5 to 1.5 wt% glycine and/or said glycine derivative by weight based on said foods or drinks.

10. The use of glycine and/or (earth)alkali glycinate salts, ammonium glycinate and/or esters of glycine and C1-C8 alcohols according to claim 7 or 9 as antibacterial agent in concentrations of 0.5 to 3 wt% of one or more organic acids and/or one or more of their salts based on total weight of product.

11. The use of glycine and/or (earth)alkali glycinate salts, ammonium glycinate and/or esters of glycine and C1-C8 alcohols according to claim 8 as antibacterial agent in concentrations of 0.5 to 3 wt% lactic acid and/or its salt based on total weight of product.

## Patentansprüche

1. Verwendung von Glycin und/oder (Erd)alkaliglycinat-Salzen, Ammonium-Glycinat und/oder Estern von Glycin und C1-C8 Alkoholen als antibakterielles Agens gegen die Gram-negativen bakteriellen Nahrungsmittelpathogene *Escherichia Coli, Enterobacter Sakazakii, Salmonella* und *Campylobacter* in gekühlten Nahrungsmitteln und/oder gekühlten Getränken mit der Maßgabe, dass zusätzlich zum Glycin und/oder Glycinderivat weder ein Heterosaccharid enthaltendes Makromolekül noch 1,5-D-Anhydrofructose als antibakterielles Agens in den Nahrungsmitteln und Getränken verwendet wird.

2. Die Verwendung von Glycin und/oder (Erd)alkaliglycinat-Salzen, Ammonium-Glycinat und/oder Estern von Glycin und C1-C8 Alkoholen nach Anspruch 1 als einziges antibakterielles Agens in den Nahrungsmitteln und/oder Getränken.

3. Die Verwendung von Glycin und/oder (Erd)alkaliglycinat-Salzen, Ammonium-Glycinat und/oder Estern von Glycin und C1-C8 Alkoholen nach Anspruch 1 oder 2 als antibakterielles Agens in einer Fleisch enthaltenden Verwendung.

4. Die Verwendung von Glycin und/oder (Erd)alkaliglycinat-Salzen, Ammonium-Glycinat und/oder Estern von Glycin und C1-C8 Alkoholen nach Anspruch 1 oder 2 als antibakterielles Agens in einer Frischfleisch enthaltenden Verwendung.

5. Die Verwendung von Glycin und/oder (Erd)alkaliglycinat-Salzen, Ammonium-Glycinat und/oder Estern von Glycin und C1-C8 Alkoholen nach einem der Ansprüche 1 bis 3 als antibakterielles Agens gegen *Salmonella* Bakterien und bevorzugt gegen *Salmonella typhimurium* und/oder *Salmonella enteriditis.*

6. Die Verwendung von Glycin und/oder (Erd)alkaliglycinat-Salzen, Ammonium-Glycinat und/oder Estern von Glycin und C1-C8 Alkoholen nach einem der Ansprüche 1 bis 3 als antibakterielles Agens gegen *Escherichia Coli* Bakterien und bevorzugt gegen *Escherichia Coli O157:H7.*

7. Die Verwendung von Glycin und/oder (Erd)alkaliglycinat-Salzen, Ammonium-Glycinat und/oder Estern von Glycin und C1-C8 Alkoholen nach einem der Ansprüche 1 bis 6 als antibakterielles Agens in Nahrungsmitteln und/oder Getränken, die mit einer oder mehreren organischen Säuren und/oder einer oder mehreren Salzen davon kombiniert wurden.

8. Die Verwendung von Glycin und/oder (Erd)alkaliglycinat-Salzen, Ammonium-Glycinat und/oder Estern von Glycin und C1-C8 Alkoholen nach Anspruch 7 als antibakterielles Agens in Nahrungsmitteln und/oder Getränken, die mit Milchsäure und/oder einem Milchsäuresalz kombiniert wurden.

9. Die Verwendung von Glycin und/oder (Erd)alkaliglycinat-Salzen, Ammonium-Glycinat und/oder Estern von Glycin und C1-C8 Alkoholen nach einem der Ansprüche 1 bis 8 als antibakterielles Agens, wobei die Konzentration 0,5 bis 3 Gew.-%, und bevorzugt 0,5 bis 1,5 Gew.-%, Glycin und/oder Glycinderivat bezogen auf des Gewicht des Nahrungsmittel oder des Getränks ist.

10. Die Verwendung von Glycin und/oder (Erd)alkaliglycinat-Salzen, Ammonium-Glycinat und/oder Estern von Glycin und C1-C8 Alkoholen nach Anspruch 7 oder 9 als antibakterielles Agens, wobei die Konzentration der einen oder der mehreren organischen Säuren und/oder der einen oder der mehreren Salze davon 0,5 bis 3 Gew.-% bezogen auf das Gesamtgewicht des Produkts ist.

11. Die Verwendung von Glycin und/oder (Erd)alkaliglycinat-Salzen, Ammonium-Glycinat und/oder Estern von Glycin und C1-C8 Alkoholen nach Anspruch 8 als antibakterielles Agens, wobei die Konzentration der Milchsäure und/oder des Milchsäureslzes 0,5 bis 3 Gew.-% bezogen auf das Gesamtgewicht des Produkts ist.

## Revendications

1. Utilisation de glycine et/ou de sels de glycinate alcalino-terreux, de sels de glycinate alcalins, de glycinate d'ammonium et/ou d'esters de glycine et d'alcools en C1-C8 en tant qu'agent antibactérien contre les agents pathogènes alimentaires bactériens à gram négatif *Escherichia Coli, Enterobacter Sakazakii, Salmonella* et *Campylobacter* dans des aliments réfrigérés et/ou des boissons réfrigérées, sous réserve que, outre ladite glycine et/ou le dérivé de glycine, aucune macromolécule contenant un hétéro-saccharide n'est utilisée, ni aucun 1,5-D-anhydrofructose n'est utilisé en tant qu'agent antibactérien dans lesdits aliments et boissons.

2. Utilisation de glycine et/ou de sels de glycinate alcalino-terreux, de sels de glycinate alcalins, de glycinate d'ammonium et/ou d'esters de glycine et d'alcools en C1-C8 selon la revendication 1 en tant qu'agent antibactérien unique dans des aliments et/ou des boissons.

3. Utilisation de glycine et/ou de sels de glycinate alcalino-terreux, de sels de glycinate alcalins, de glycinate d'ammonium et/ou d'esters de glycine et d'alcools en C1-C8 selon la revendication 1 ou 2 en tant qu'agent antibactérien dans des applications concernant de la viande.

4. Utilisation de glycine et/ou de sels de glycinate alcalino-terreux, de sels de glycinate alcalins, de glycinate d'ammonium et/ou d'esters de glycine et d'alcools en C1-C8 selon la revendication 1 ou 2 en tant qu'agent antibactérien dans des applications concernant de la viande fraîche.

5. Utilisation de glycine et/ou de sels de glycinate alcalino-terreux, de sels de glycinate alcalins, de glycinate d'ammonium et/ou d'esters de glycine et d'alcools en C1-C8 selon l'une quelconque des revendications 1 à 3 en tant qu'agent antibactérien contre une bactérie *Salmonella* et, de préférence, contre *Salmonella typhimurium* et/ou *Salmonella enteriditis.*

6. Utilisation de glycine et/ou de sels de glycinate alcalino-terreux, de sels de glycinate alcalins, de glycinate d'ammonium et/ou d'esters de glycine et d'alcools en C1-C8 selon l'une quelconque des revendications 1 à 3 en tant qu'agent antibactérien contre une bactérie *Escherichia Coli* et, de préférence, contre *Escherichia Coli O157* :H7.

7. Utilisation de glycine et/ou de sels de glycinate alcalino-terreux, de sels de glycinate alcalins, de glycinate d'ammonium et/ou d'esters de glycine et d'alcools en C1-C8 selon l'une quelconque des revendications 1 à 6 en tant qu'agent antibactérien dans des aliments et/ou des boissons en association avec un ou plusieurs acides organiques et/ou un ou plusieurs de leurs sels.

8. Utilisation de glycine et/ou de sels de glycinate alcalino-terreux, de sels de glycinate alcalins, de glycinate d'ammonium et/ou d'esters de glycine et d'alcools en C1-C8 selon la revendication 7 en tant qu'agent antibactérien dans des aliments et/ou des boissons en association avec l'acide lactique et/ou son sel lactate.

9. Utilisation de glycine et/ou de sels de glycinate alcalino-terreux, de sels de glycinate alcalins, de glycinate d'ammonium et/ou d'esters de glycine et d'alcools en C1-C8 selon l'une quelconque des revendications 1 à 8 en tant qu'agent antibactérien en des concentrations de 0,5 à 3 % en poids et, de préférence, de 0,5 à 1,5 % en poids de glycine et/ou dudit dérivé de glycine en poids en se basant sur lesdits aliments ou boissons.

10. Utilisation de glycine et/ou de sels de glycinate alcalino-terreux, de sels de glycinate alcalins, de glycinate d'ammonium et/ou d'esters de glycine et d'alcools en C1-C8 selon la revendication 7 ou 9 en tant qu'agent antibactérien en des concentrations de 0,5 à 3 % en poids de l'un ou plusieurs acides organiques et/ou de l'un ou plusieurs de leurs sels en se basant sur le poids total de produit.

11. Utilisation de glycine et/ou de sels de glycinate alcalino-terreux, de sels de glycinate alcalins, de glycinate d'ammonium et/ou d'esters de glycine et d'alcools en C1-C8 selon la revendication 8 en tant qu'agent antibactérien en des concentrations de 0,5 à 3 % en poids d'acide lactique et/ou de son sel en se basant sur le poids total de produit.
